# EUROPEAN PATENT APPLICATION

(11) **EP 4 456 271 A2**
(43) Date of publication of application: **30.10.2024**
(21) Application number: 24166500.9
(22) Date of filing: 26.03.2024
(51) Int. Cl.: H01M 50/107, H01M 50/547, H01M 50/559, H01M 50/567

(54) **CYLINDRICAL SECONDARY BATTERY**

(30) Priority: 24.04.2023 KR 20230053229
(71) Applicant: Samsung SDI Co., Ltd., Yongin-si, Gyeonggi-do 17084 (KR)
(72) Inventor: PARK, Gun Gue, 17084 Yongin-si (KR); KO, Sung Gwi, 17084 Yongin-si (KR); JUNG, Hyun Ki, 17084 Yongin-si (KR); YOO, Yoon Sun, 17084 Yongin-si (KR); YU, Gwan Hyeon, 17084 Yongin-si (KR); KIM, Myung Seob, 17084 Yongin-si (KR); KIM, Mun Sung, 17084 Yongin-si (KR); JUN, Woo Tae, 17084 Yongin-si (KR)
(74) Representative: Marks & Clerk LLP

(57) **Abstract**

A cylindrical secondary battery includes a can and a terminal part including: a first terminal outside of the can; and a second terminal coupled to a terminal hole of the can, arranged inside and outside of the can, and riveted to the first terminal from an outside of the can. According to embodiments of the present disclosure, plastic deformation of a rivet terminal occurs outside of a can, and there is no limitation on the shape of the rivet terminal inside the can. In addition, the rivet terminal may be processed regardless of a size or height of the can, and there is no interference with the can, and a processing time may be reduced.

## Description

### BACKGROUND

### 1. Field

Aspects of embodiments of the present disclosure relate to a cylindrical secondary battery.

### 2. Description of the Related Art

In general, a cylindrical secondary battery includes a cylindrical electrode assembly, a cylindrical can that accommodates the electrode assembly and an electrolyte, and a cap assembly that seals the can and is electrically connected to the electrode assembly and the outside. In the case of a battery module using a plurality of cylindrical secondary batteries connected to one another, bus bars are connected to upper and lower portions of the secondary batteries, respectively. Accordingly, a structure of a module may become complicated and a process time may be increased.

As such, a cylindrical secondary battery in which positive and negative terminals are both disposed at one side of the secondary battery has been developed. Cylindrical secondary batteries of this type require a process for combining the cathode terminal and the can. However, there may be a problem in that the process becomes complicated due to interference with the can in the process.

The above information disclosed in this Background section is provided for enhancement of understanding of the background of the invention and, therefore, it may contain information that does not constitute prior art.

### SUMMARY

According to an aspect of embodiments of the present disclosure, a cylindrical secondary battery having an improved terminal coupling structure is provided.

According to one or more embodiments of the present disclosure, a cylindrical secondary battery includes a can and a terminal part including: a first terminal outside of the can; and a second terminal coupled to a terminal hole of the can, arranged inside and outside of the can, and configured to be riveted to the first terminal from an outside of the can.

The second terminal may include a first region parallel to an inner surface of the can in which the terminal hole is formed, and a second region extending from the first region and penetrating the terminal hole of the can to the outside of the can, and a jig groove into which a riveting processing jig is insertable is formed in the second region.

Ends of the first region and the second region may be configured to be riveted to the first terminal.

The first terminal and the second terminal may be made of a same material.

The first terminal may be electrically connected to a bus bar.

The cylindrical secondary battery may further include first to third insulating members arranged between the first region and the inner surface of the can, between the second region and the terminal hole, and between the first terminal and an outer surface of the can, respectively.

A terminal groove may be concavely formed in an area corresponding to the second terminal on an outer surface of the first terminal.

The can may include a circular upper surface portion and a cylindrical side portion extending downward from the upper surface portion, and the terminal hole may be formed through the upper surface portion.

The cylindrical secondary battery may further include an electrode assembly in the can and electrically connected to the second terminal, and a cap assembly coupled to the side portion to seal the can.

The side portion may be electrically connected to the electrode assembly and insulated from the cap assembly.

According to one or more embodiments of the present disclosure, a cylindrical secondary battery includes: a can including a disk-shaped upper surface portion through which a terminal hole passes, and a cylindrical side portion extending from the upper surface portion; an electrode assembly accommodated in the can; a terminal part including a first terminal arranged outside the upper surface portion and a second terminal arranged inside the upper surface portion and riveted to the first terminal from the outside; and a cap assembly coupled to the side portion and insulated from the side portion, wherein the side portion and the second terminal are electrically connected to the electrode assembly.

The first terminal may include a plate having a through hole, and the second terminal may be inserted through the terminal hole and the through hole from the inside of the can and may have an end protruding outward from the upper surface portion.

The second terminal may include a cylindrical rivet body having a first end exposed to the outside of the upper surface portion and a flange protruding from an outer circumferential surface of a second side of the rivet body.

The rivet body may include a jig groove into which a riveting jig is insertable at an end of the upper surface portion facing outward, and an end of the rivet body and the flange may be riveted to the first terminal and the upper surface portion.

The first terminal may have a terminal groove concavely formed on the upper surface of the first terminal.

The cylindrical secondary battery may further include at least one insulating member between the first and second terminals and the upper surface portion.

The at least one insulating member may include a first insulating member between the flange and the upper surface portion and having a hollow formed therein, a second insulating member between the terminal hole and the rivet body and having a hollow formed therein, and a third insulating member between the first terminal and the upper surface and having a hollow formed therein.

A diameter of the hollow in the first insulating member may be greater than that of the terminal hole, and the second insulating member may further include a protrusion part protruding to be in contact with the flange of the second terminal and the first insulating member.

A fixing protrusion may protrude from one of the flange and the protrusion part, and an insertion groove accommodating the fixing protrusion may be located on another one of the flange and the protrusion part.

The cylindrical secondary battery may further include a first electrode current collector plate between the first insulating member and the electrode assembly and electrically connected to the first electrode plate of the electrode assembly and the second terminal, and a second electrode current collector plate between the electrode assembly and the cap assembly and electrically connected to the electrode assembly and the side portion.

The first electrode plate may be a positive electrode, and the second electrode plate may be a negative electrode.

The side portion may include a beading part concavely formed toward the inside of the can, and the second electrode current collector may include a plate surface part electrically connected to the second electrode plate and an extension part electrically connected to the beading part.

The cap assembly may include a cap plate and a gasket made of an insulating material arranged between the cap plate and the side portion, and an end of the gasket may be between an edge of the cap plate and the extension part.

According to one or more embodiments of the present disclosure, a cylindrical secondary battery includes a can and a terminal part including: a first terminal outside of the can; and a second terminal coupled to a terminal hole of the can, arranged inside and outside of the can, wherein the second terminal has been riveted to the first terminal from an outside of the can. For example, the first terminal may include a terminal groove arranged on the upper surface of the first terminal, and the second terminal may include a first region parallel to an inner surface of the can in which the terminal hole is formed, and a second region extending from the first region and penetrating the terminal hole of the can to the outside of the can, where the second region has been plastically deformed to extend into and fill the terminal groove.

At least some of the above and other features of the invention are set out in the claims.

### BRIEF DESCRIPTION OF DRAWINGS

FIG. 1 is a perspective view illustrating a cylindrical secondary battery according to one or more embodiments of the present disclosure.
FIG. 2 is a cross-sectional view of the cylindrical secondary battery according to FIG. 1.
FIG. 3 is a cross-sectional view showing some manufacturing steps of a positive electrode terminal part according to FIG. 2.
FIG. 4 is a cross-sectional view showing the positive electrode terminal part after the manufacturing steps shown in FIG. 3.
FIGS. 5A and 5B are schematic diagrams for comparing a method for manufacturing a positive electrode terminal part of a cylindrical secondary battery according to an embodiment of the present disclosure and a method for manufacturing a positive electrode terminal part of a conventional secondary battery.

### DETAILED DESCRIPTION

Some examples of the present disclosure are provided to explain the present disclosure to those skilled in the art, although the described examples may be modified in various other forms. That is, the present disclosure may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections are not to be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) of the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" may encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

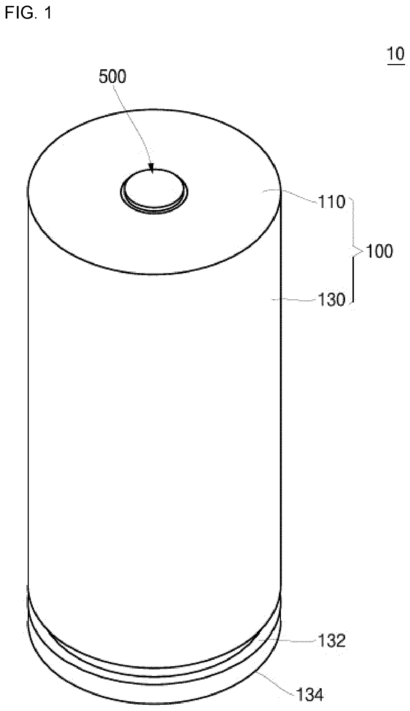

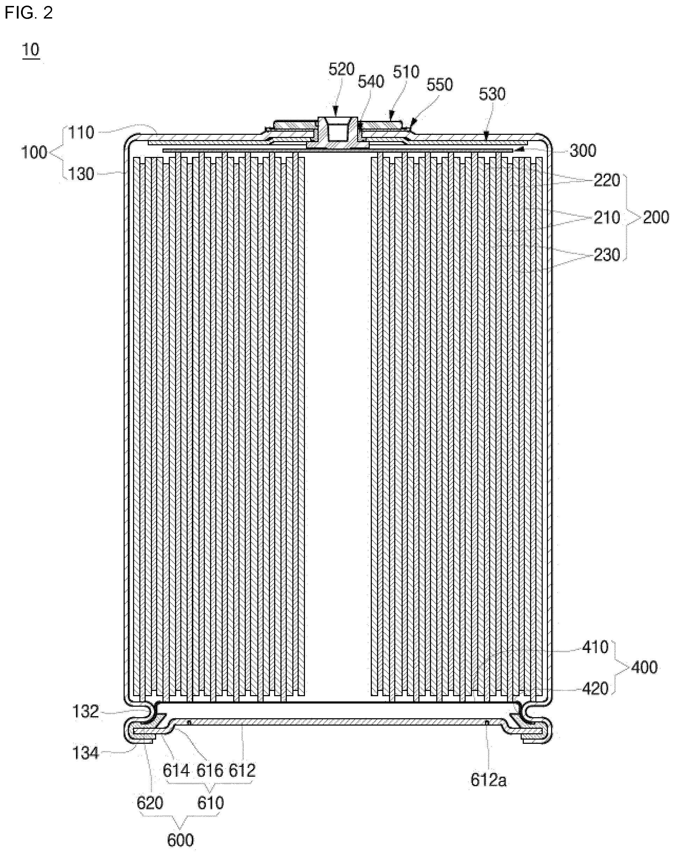

Herein, a cylindrical secondary battery according to one or more embodiments of the present disclosure and a manufacturing method thereof will be described in further detail with reference to the accompanying drawings (for convenience, on the basis of FIGS. 1 and 2, the following description will be provided by defining the upper part as the upper direction and the lower part as the lower direction).

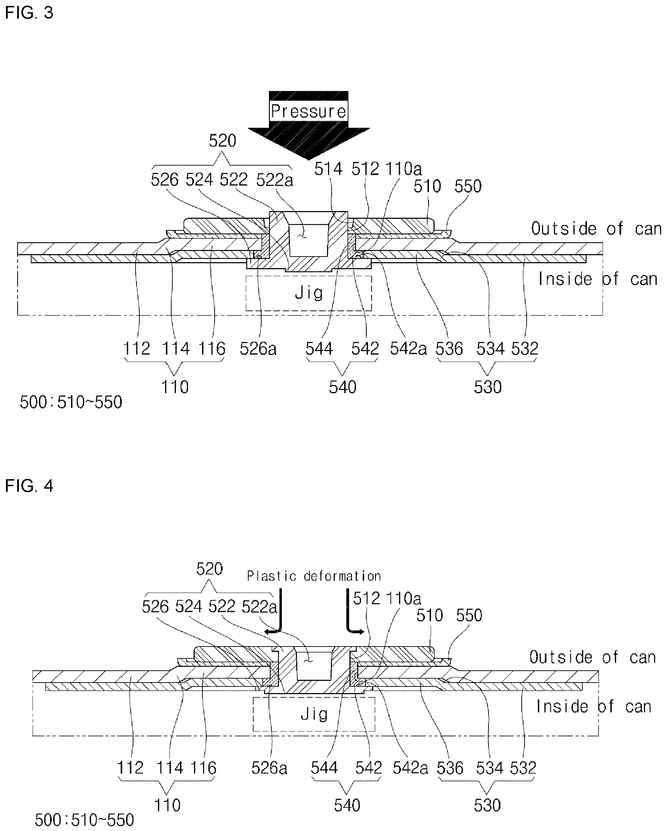

FIG. 1 is a perspective view illustrating a cylindrical secondary battery according to one or more embodiments of the present disclosure. FIG. 2 is a cross-sectional view of the cylindrical secondary battery according to FIG. 1. FIG. 3 is a cross-sectional view showing some manufacturing steps of a positive electrode terminal part according to FIG. 2. FIG. 4 is a cross-sectional view showing the positive electrode terminal part after the manufacturing steps shown in FIG. 3.

Referring to FIGS. 1 and 2, a cylindrical secondary battery 10 according to an embodiment of the present disclosure may include a cylindrical can (or case) 100, an electrode assembly 200 accommodated inside the can 100, a first electrode current collector plate 300 and a second electrode current collector plate 400, a terminal part 500 provided at a side of the can 100, and a cap assembly 600 provided at another side of the can 100.

As shown in FIGS. 1 to 4, the can 100 may include an upper surface portion (e.g., a circular upper surface portion) 110 and a cylindrical side portion 130 extending downward from the upper surface portion 110. A lower portion of the side portion 130 is open, and the can 100 has a cylindrical shape in which the lower end thereof is open.

As shown in FIGS. 2 to 4, the upper surface portion 110 may include a first plate surface 112 connected to the side portion 130, a connection surface 114 formed to incline upward from the first plate surface 112, and a second plate surface 116 connected to the connection surface 114 and parallel to the first plate surface 112. A circular terminal hole 110a may be formed through the center of the second plate surface 116. That is, the upper surface portion 110 has a shape in which the area where the terminal hole 110a is formed protrudes convexly upward. In an embodiment, the second plate surface 116 may be formed by press-fitting the first plate surface 112 from the inside to the outside by deep drawing. For example, the connection surface 114 and the second plate surface 116 may have circular or polygonal shapes. In an embodiment, the second plate surface 116 protrudes outward, and a space for installing the terminal part 500 can be secured, which will be described further later. Therefore, a separation distance between the upper surface portion 110 and the first electrode current collector plate 300 may be reduced. Accordingly, a loss of internal space of the can 100 may be minimized or reduced.

As shown in FIGS. 1 and 2, in an embodiment, an upper end of the side portion 130 is connected to the upper surface portion 110, and, thus, the side portion 130 is integrally formed with the upper surface portion 110. A lower end of the side portion 130 is open, and the cap assembly 600 is provided at the open end. In an embodiment, a beading part 132 may be formed adjacent to the lower end of the side portion 130. The beading part 132 may be concavely formed inward from the side portion 130. The end of the side portion 130, spaced apart from the beading part 132, may be bent toward the inside of the can 100 to form a crimping part 134. The beading part 132 may prevent or substantially prevent the electrode assembly 200 from being separated. The cap assembly 600 may be disposed between the beading part 132 and the crimping part 134. The crimping part 134 may fix the cap assembly 600 to seal the can 100.

In an embodiment, the can 100 having the aforementioned structure may be formed of steel, a steel alloy, aluminum, an aluminum alloy, or the like, but the material is not limited thereto. The electrode assembly 200, the first electrode current collector plate 300, and the second electrode current collector plate 400 may be accommodated within the can 100, together with an electrolyte.

As shown in FIG. 2, the electrode assembly 200 may have a shape in which a first electrode plate 210, a second electrode plate 220, and a separator 230 interposed therebetween are wound in a cylindrical shape. In an embodiment, the first electrode plate 210 may be a positive electrode plate, and the second electrode plate 220 may be a negative electrode plate. However, the opposite configuration may also be possible.

In an embodiment, the first electrode plate 210 may be formed by coating a positive electrode active material on at least one surface of an aluminum (Al) foil. For example, the positive electrode active material may be a transition metal oxide (LiCoO₂, LiNiO₂, LiMn₂O₄, etc.). The first electrode plate 210 may include a first electrode uncoated portion not coated with the positive electrode active material. In this embodiment, the first electrode uncoated portion may be disposed toward the upper surface portion 110 of the can 100. In addition, the first electrode uncoated portion may protrude upward from the separator 230 and may be electrically connected to the first electrode current collector plate 300.

In an embodiment, the second electrode plate 220 may be formed by coating a negative electrode active material on at least one surface of a copper (Cu) or nickel (Ni) foil. For example, the negative electrode active material may be graphite, carbon, etc. A second electrode uncoated portion not coated with the negative electrode active material may be provided on the second electrode plate 220. In an embodiment, the uncoated portion of the second electrode may be disposed toward the lower portion of the can 100. In addition, the second electrode uncoated portion may protrude downward from the separator 230 and may be electrically connected to the second electrode current collector plate 400. In an embodiment, a portion of the second electrode uncoated portion may be electrically connected to the beading part 132 of the can 100.

In an embodiment, the separator 230 may be polyethylene (PE) or polypropylene (PP), but is not limited thereto. The separator 230 may prevent or substantially prevent an electrical short between the first electrode plate 210 and the second electrode plate 220 and, in an embodiment, allow only the movement of lithium ions.

The electrode assembly 200 having the above-described structure may be electrically connected to the first electrode current collector plate 300 and the second electrode current collector plate 400 to be electrically connected to the terminal part 500 and the can 100, respectively.

In an embodiment, as shown in FIG. 2, the first electrode current collector plate 300 has a disk shape and may be made of a same material as the first electrode plate 210. For example, the first electrode current collector plate 300 may be made of aluminum or an aluminum alloy. In an embodiment, the first electrode current collector plate 300 has a smaller size than the upper surface portion 110 of the can 100 to prevent or substantially prevent the first electrode current collector plate 300 from being electrically connected to the can 100. The first electrode current collector plate 300 may be welded in a state in which a lower surface is in contact with the first electrode uncoated portion of the first electrode plate 210. Accordingly, the first electrode current collector plate 300 and the first electrode plate 210 may be electrically connected. In addition, an upper surface of the first electrode current collector plate 300 may be welded to the second terminal 520 of the terminal part 500 to be described further later. Accordingly, the first electrode current collector plate 300 and the second terminal 520 may be electrically connected. Accordingly, the first electrode plate 210 and the second terminal 520 may be electrically connected by the first electrode current collector plate 300. That is, the first electrode current collector plate 300 serves as a passage for current flow between the first electrode plate 210 and the second terminal 520.

In an embodiment, the second electrode current collector plate 400 may include a disk-shaped plate surface part 410 and an extension part 420 extending from the plate surface part 410. In an embodiment, an upper surface of the plate surface part 410 may be welded in a state of being in contact with the uncoated portion of the second electrode plate 220 of the electrode assembly 200. Accordingly, the second electrode current collector plate 400 and the second electrode plate 220 may be electrically connected. In an embodiment, the second electrode current collector plate 400 may be made of a same material as the second electrode plate 220. For example, the second electrode current collector plate 400 may be made of copper. In an embodiment, the extension part 420 may extend downward from an edge of the plate surface part 410. The extension part 420 may be in close contact with the inner surface of the beading part 132. In an embodiment, the extension part 420 may have a curve corresponding to that of the beading part 132. For example, the extension part 420 may be welded and electrically connected to the beading part 132. However, the second electrode current collector plate 400 may not be electrically connected to the cap assembly 600.

As shown in FIG. 2, the cap assembly 600 may include a cap plate 610 for sealing the can 100 and a gasket 620 that insulates the can 100 and the cap plate 610 from each other.

In an embodiment, the cap plate 610 may include a disk-shaped plane part 612, an inclination surface 616 connected to the plane part 612, and an extension surface 614 connected to the inclination surface 616. The plane part 612 may be disposed substantially parallel to the second electrode current collector plate 400. The inclination surface 616 may extend downwardly from the edge of the plane part 612. The extension surface 614 may extend from an edge of inclination surface 616 and may be parallel to the plane part 612. The extension surface 614 may be disposed between the beading part 132 and the crimping part 134 in a state of being surrounded by the gasket 620. In an embodiment, a notch 612a may be formed on the plane part 612. The notch 612a may be broken when an internal pressure of the secondary battery 10 exceeds a certain pressure. A gas inside the secondary battery 10 may be discharged by the breakage of the notch 612a. That is, the notch 612a serves as a vent.

The gasket 620 may be disposed between the bottom of the beading part 132 and the crimping part 134 and may cover the extension surface 614 of the cap plate 610. The gasket 620 may cover part or all of the extension surface 614. The side where the gasket 620 and the extension surface 614 come into contact with each other may be defined as the inside, and the side where the gasket 620 comes into contact with the beading part 132 may be defined as the outside. In this case, a part of the extension part 420 of the second electrode current collector plate 400 may be inserted between the upper outer portion of the gasket 620 and the beading part 132. Therefore, due to the gasket 620, the extension part 420 of the second electrode current collector plate 400 and the extension surface 614 of the cap plate 610 may not be in contact with each other. That is, the gasket 620 may insulate the cap plate 610 and the can 100 from each other, and may insulate the cap plate 610 and the second electrode current collector plate 400 from each other.

As described above, the first electrode current collector plate 300 and the second electrode current collector plate 400 are electrically connected to the electrode assembly 200. In addition, the first electrode current collector plate 300 is electrically connected to the second terminal 520, and the second electrode current collector plate 400 is electrically connected to the can 100. Therefore, the second terminal 520 has a positive electrode polarity, and the can 100 has a negative electrode polarity. Herein, the terminal part 500 will be described in further detail.

As shown in FIGS. 1 to 4, the terminal part 500 may include a first terminal 510, a second terminal 520, and first to third insulating members 530, 540, and 550.

In an embodiment, as shown in FIG. 3, the first terminal 510 is a disk-shaped plate as shown in FIG. 1. The first terminal 510 may be referred to as a terminal plate. The first terminal 510 is disposed outside the upper surface portion 110 of the can 100 and coupled with the second terminal 520. In an embodiment, the first terminal 510 is disposed outside the second plate surface 116. The first terminal 510 is coupled to the second terminal 520 having passed through the terminal hole 110a and is fixed to the outside of the second plate surface 116. In an embodiment, the first terminal 510 may be made of a same material as the second terminal 520. For example, the first terminal 510 may be made of aluminum or an aluminum alloy. A through hole 512 for inserting the second terminal 520 may be formed through a center of the first terminal 510. A terminal groove 514 for seating the second terminal 520 may be formed in a peripheral area of the through hole 512. The terminal groove 514 may be concavely formed from an upper surface of the first terminal 510. In addition, the terminal groove 514 may be formed to have a larger diameter than a part of the first terminal 510 to be described later. In an embodiment, after the first terminal 510 and the second terminal 520 are coupled, upper surfaces of the first terminal 510 and the second terminal 520 may be arranged on a same line. A bus bar may be electrically connected to an upper surface finally formed after the first terminal 510 and the second terminal 520 are coupled.

In an embodiment, as shown in FIG. 3, the second terminal 520 has a substantially cylindrical shape and may be referred to as a rivet terminal. The second terminal 520 is coupled to the first terminal 510 and the upper surface portion 110 of the can 100 by riveting. The second terminal 520 may be made of a same material as the first terminal 510 and the first electrode current collector plate 300. For example, the second terminal 520 may be made of aluminum or an aluminum alloy. In an embodiment, the second terminal 520 may include a cylindrical rivet body 522, a jig groove 522a formed inside the rivet body 522, a deformed portion 524 formed at an end of the rivet body 522, and a protrusion part 526 formed on an outer circumferential surface of the rivet body 522.

FIG. 3 shows a state in which the first terminal 510 and the first to third insulating members 530, 540, and 550 are placed in the installation position before the second terminal 520 is placed and pressure is applied. FIG. 4 shows a state in which plastic deformation is applied to the second terminal 520 by applying pressure in the state shown in FIG. 3.

Referring to FIG. 3, the rivet body 522 is inserted through the upper surface portion 110 of the can 100, and has a first end protruding outward from the first terminal 510 through the terminal hole 110a. The part of the rivet body 522 protruding outward from the first terminal 510 is defined as a first end. A jig groove 522a is concavely formed inward from the first end of the first terminal 510. In an embodiment, the jig groove 522a may be shaped to correspond to an end of a processing jig that presses the first terminal 510. However, the shape shown in FIG. 3 is provided for illustration, and the present disclosure is not limited thereto. When the processing jig is inserted into the jig groove 522a and pressure is applied thereto, the first end of the rivet body 522 is subjected to plastic deformation by the pressure, as shown in FIG. 4. The jig groove 522a may have a shape in which a size thereof increases toward an outer end (an end in a direction in which the processing jig is inserted). The first end of the rivet body 522 is pushed in a direction of an outer circumferential surface while being pressed in the direction in which the pressure is applied. Therefore, the aforementioned shape of the jig groove 522a may serve to guide the end of the rivet body 522 to easily undergo plastic deformation toward the outside. As the first end of the rivet body 522 is pushed, the terminal groove 514 of the first terminal 510 comes into close contact with the rivet body while being filled by the same. Accordingly, the rivet body 522 and the first terminal 510 may be coupled to each other.

The deformed portion 524 is provided at a second end of the rivet body 522. The deformed portion 524 is a portion protruding outward from the second end of the rivet body 522. The deformed portion 524 has a diameter smaller than that of the rivet body 522 and may protrude to a thickness (e.g., a predetermined thickness). In an embodiment, for example, the rivet body 522 is cylindrical, and the deformed portion 524 may also protrude in a circular shape. As shown in FIG. 4, the deformed portion 524 is subjected to plastic deformation by pressure when the rivet body 522 is pressed and pushed toward the protrusion part 526. In an embodiment, however, the deformed portion 524 may be omitted.

The protrusion part 526 may protrude outward along the outer circumferential surface of the second end of the rivet body 522. In an embodiment, the lower surface of the protrusion part 526 may be formed at a right angle with respect to the outer circumferential surface of the rivet body 522. The protrusion part 526 may have a height smaller than the height of the rivet body 522 in the longitudinal direction (in the vertical direction on the basis of FIG. 3). In an embodiment, referring to FIG. 3, a fixing protrusion 526a may protrude from a surface of the protrusion part 526. A groove corresponding to the fixing protrusion 526a may be formed on the second insulating member 540. The fixing protrusion 526a may be engaged with the second insulating member 540 to prevent or substantially prevent rotation of the second terminal 520. In an embodiment, the fixing protrusion 526a may include a plurality of protrusions. In an embodiment, the fixing protrusion 526a may be provided on at least a portion of the surface of the protrusion part 526 in a straight line, curve, or ring shape. The protrusion part 526 is a part that is subjected to plastic deformation by pressure to be pushed toward the first insulating member 530 when the rivet body 522 is pressed. As shown in FIG. 4, the first insulating member 530 and the second terminal 520 may be coupled to each other by deformation of the protrusion part 526.

The first terminal 510 and the second terminal 520 having the aforementioned structures may be insulated from the upper surface portion 110 of the can 100 by the first to third insulating members 530, 540, and 550.

As shown in FIGS. 2 and 3, the first insulating member 530 is disposed between the upper surface portion 110 and the second terminal 520 of the can 100 to insulate the upper surface portion 110 and the second terminal 520 from each other. That is, the first insulating member 530 is disposed inside the can 100. In an embodiment, the first insulating member 530 may have a shape corresponding to the stepped shape of the upper surface portion 110. That is, the first insulating member 530 may include a first region 532 in contact with a lower portion of the first plate surface 112 of the upper surface portion 110, a second region 534 corresponding to or adjacent to the connection surface 114 of the upper surface portion 110, and a third region 536 in contact with the second plate surface 116 of the upper surface portion 110. A hollow or opening may be formed at a center of the third region 536 to allow the second terminal 520 to be penetrated and inserted therethrough. For example, a diameter of the hollow or opening of the first insulating member 530 may be greater than a diameter of the terminal hole 110a of the upper surface portion 110.

The second insulating member 540 is disposed between the rivet body 522 of the second terminal 520 and the second plate surface 116 of the upper surface portion 110 to insulate the rivet body 522 and the second plate surface 116 from each other. That is, the second insulating member 540 is disposed between an outer circumferential surface of the rivet body 522 and the terminal hole 110a formed in the second plate surface 116. In an embodiment, the second insulating member 540 may have a substantially cylindrical body 544 in which a hollow or opening is formed. In an embodiment, an end of the body 544 facing the inside of the can 100 may protrude outward. The protrusion part may be defined as a protrusion part 542. In an embodiment, the protrusion part 542 may come into close contact with the third region 536 of the first insulating member 530. In an embodiment, referring to FIG. 3, an insertion groove 542a into which the fixing protrusion 526a of the protrusion part 526 is inserted may be formed on a lower surface of the protrusion part 542. The insertion groove 542a is concavely formed from the lower surface of the protrusion part 542.

The third insulating member 550 is disposed between the first terminal 510 and the second plate surface 116 of the upper surface portion 110 to insulate the first terminal 510 and the second plate surface 116 from each other. In an embodiment, the third insulating member 550 may have a larger diameter than the first terminal 510. A hollow or opening for penetration insertion of the second terminal 520 may be formed through the center of the third insulating member 550. An outer circumferential surface of the body 544 of the second insulating member 540 may be in contact with the hollow or opening. For example, a groove in which the first terminal 510 is seated may be formed on an upper surface of the third insulating member 550. Accordingly, when the first terminal 510 is coupled, movement thereof may be prevented or substantially prevented. For example, a height of an upper end of the body 544 of the second insulating member 540 and a height of an upper surface of the third insulating member 550 may be the same. In addition, for example, a groove may be formed on the upper surface of the third insulating member 550, and a height of the upper surface of the groove and the height of the upper end of the body 544 of the second insulating member 540 may be the same.

A manufacturing process of the secondary battery 10 having the aforementioned structure will be briefly described. First, the upper surface portion 110 may be disposed upward. Thereafter, a support jig for pressure support is installed inside the can 100, and pressure is applied from the outside of the can 100 to couple the second terminal 520 to the first terminal 510 and the can 100. Accordingly, the terminal part 500 may be fixed to the can 100. Then, the upper surface portion 110 may be disposed downward. Next, the first electrode current collector plate 300, the electrode assembly 200, and the second electrode current collector plate 400 may be inserted into the can 100. The first electrode current collector plate 300 and the electrode assembly 200 may be electrically connected to the first terminal 510 via the second terminal 520. Next, after filling the inside of the can 100 with an electrolyte, the beading part 132 may be formed. The second electrode current collector plate 400 may be electrically connected to the beading part 132. Then, the cap plate 610 may be disposed on the beading part 132 via the gasket 620 to form the crimping part 134. Separation of the electrode assembly 200 and the second electrode current collector plate 400 may be prevented or substantially prevented by the beading part 132. In addition, the cap assembly 600 may be fixed to the can 100 by the crimping part 134 . According to the above process, the upper surface portion 110 of the can 100 has a negative electrode polarity and the terminal part 500 has a positive electrode polarity. That is, the secondary battery 10 including a positive electrode and a negative electrode both formed on the upper side of the can 100 (the above-described process sequences are provided as an arbitrary sequence, and the respective process sequences may be changed or performed concurrently or simultaneously).

Herein, a process of providing the terminal part 500 will be described in further detail.

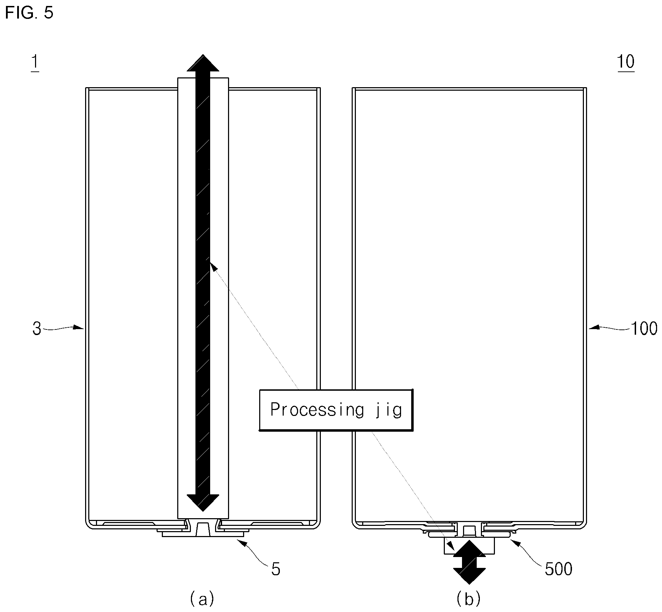

FIG. 5 is a schematic diagram for comparing a method for manufacturing a positive electrode terminal part of a cylindrical secondary battery according to an embodiment of the present disclosure and a method for manufacturing a positive electrode terminal part of a conventional secondary battery.

As shown in FIG. 3, after providing the can 100 during the manufacturing process, the upper surface portion 110 may be disposed to face upward. Thereafter, the first to third insulating members 530, 540, and 550 may be disposed at installation positions. The first terminal 510 and the second terminal 520 may then be placed at the installation locations. Here, the second terminal 520 is disposed such that the deformed portion 524 faces the inside of the can 100, and the jig groove 522a faces the outside of the can 100. Here, a support jig (indicated as "Jig" in FIGS. 3 and 4) may be installed so as to prevent or substantially prevent the second terminal 520 from deviating. Then, as shown in FIG. 4, a processing jig is inserted into the jig groove 522a of the second terminal 520 from the outside of the can 100. When pressure is applied with the processing jig, the second terminal 520 is pressed by the pressure and plastic deformation occurs. By undergoing plastic deformation, the second terminal 520 is pressed against the first terminal 510 and the first insulating member 530. Here, the deformed portion 524 and the protrusion part 526 of the second terminal 520 are pressed by the support jig and external pressure. The deformed portion 524 and the protrusion part 526 are compressed while surrounding the hollow of the first insulating member 530. Accordingly, the protrusion part 526 may be brought into close contact with the upper surface portion 110 of the can 100 with the first insulating member 530 interposed therebetween. In addition, a first end of the rivet body 522 of the second terminal 520 is pressed by a processing jig. The pressure applied by the processing jig is supported by the support jig. Thus, pressure can be transferred to the rivet body 522. The end of the rivet body 522 being at a side of the jig groove 522a may be subjected to plastic deformation and may be compressed with the first terminal 510. Here, the end of the rivet body 522 is compressed while surrounding the peripheral area of the through hole 512 of the first terminal 510 and the terminal groove 514. Accordingly, the first terminal 510 and the second terminal 520 may come into close contact with the upper surface portion 110 of the can 100.

As shown in FIG. 5A, in a conventional secondary battery 1, a processing jig is placed inside a can 3 and pressure is applied to form a positive electrode terminal 5. Therefore, when driving the processing jig, a stroke corresponding to a length of the can 3 is required (the driving stroke of the processing jig for processing the positive electrode terminal is shown by an arrow in FIG. 5A). Since the stroke varies according to the length of the can 3, the processing jig also has to be changed according to the type of the secondary battery 1. In other words, the conventional secondary battery 1 has a structure in which common use of processing facilities is not possible. In addition, since interferences between the can 3 and internal structures have to be taken into consideration, the internal shape of the positive electrode terminal 5 may not be freely made.

However, as described above, in an embodiment of the present disclosure, a support jig for supporting pressure is disposed inside the can 100. In addition, pressure for plastic deformation of the second terminal 520 is applied only from the outside of the can 100. Therefore, the processing jig can be driven regardless of the length or size of the can 100. In addition, a stroke only enough to process the second terminal 520 needs to be secured, compared to the conventional secondary battery, and the stroke of the processing jig may thereby be shortened, as shown in FIG. 5B. Accordingly, a processing time is shortened and common use of processing equipment is possible. In addition, since plastic deformation of the second terminal 520 is performed from the outside, the degree of freedom of the shape of the inner side of the can of the second terminal 520 is increased. In addition, a processed portion of the second terminal 520 can be visually inspected from the outside, improving reliability of a product.

As described above, according to embodiments of the present disclosure, plastic deformation of a rivet terminal occurs outside of a can, and there is no limitation on a shape of the rivet terminal inside the can. In addition, the rivet terminal may be processed regardless of a size or height of the can, and there is no interference with the can, and a processing time may be reduced
In addition, since the rivet terminal can be processed regardless of the size or height of the can, there is no interference with the can, and a processing time can be reduced. Accordingly, equipment can be used regardless of the size of the can, and, thus, common use of equipment is possible. In addition, after processing the rivet terminal, a processed portion is exposed to the outside of the can, thereby facilitating visually inspecting whether or not there is a defect. Accordingly, a defective rate of a secondary battery may be reduced and reliability of a product may be improved.

While some embodiments for carrying out the present disclosure have been described herein, the present disclosure is not limited to these embodiments, and it will be understood by a person skilled in the art that various changes in form and details may be made therein without departing from the scope of the present disclosure as set forth by the following claims.

Further Embodiments are set out in the following Numbered Paragraphs (NPs):
NP1. A cylindrical secondary battery comprising a can and a terminal part comprising:
   a first terminal outside of the can; and
   a second terminal coupled to a terminal hole of the can, arranged inside and outside of the can, and riveted to the first terminal from an outside of the can.
NP2. The cylindrical secondary battery as claimed in NP1, wherein the second terminal comprises a first region parallel to an inner surface of the can in which the terminal hole is formed, and a second region extending from the first region and penetrating the terminal hole of the can to the outside of the can, and a jig groove into which a riveting processing jig is insertable is formed in the second region.
NP3. The cylindrical secondary battery as claimed in NP2, wherein ends of the first region and the second region are riveted to the first terminal.
NP4. The cylindrical secondary battery as claimed in NP2, further comprising first to third insulating members arranged between the first region and the inner surface of the can, between the second region and the terminal hole, and between the first terminal and an outer surface of the can, respectively.
NP5. The cylindrical secondary battery as claimed in NP1, wherein the first terminal and the second terminal are made of a same material.
NP6. The cylindrical secondary battery as claimed in NP1, wherein the first terminal is electrically connected to a bus bar.
NP7. The cylindrical secondary battery as claimed in NP1, wherein a terminal groove is concavely formed in an area corresponding to the second terminal on an outer surface of the first terminal.
NP8. The cylindrical secondary battery as claimed in NP1, wherein the can comprises a circular upper surface portion and a cylindrical side portion extending downward from the upper surface portion, and the terminal hole is formed through the upper surface portion.
NP9. The cylindrical secondary battery as claimed in NP8, further comprising:
   an electrode assembly in the can and electrically connected to the second terminal; and
   a cap assembly coupled to the side portion to seal the can.
NP10. The cylindrical secondary battery as claimed in NP9, wherein the side portion is electrically connected to the electrode assembly and insulated from the cap assembly.
NP11. A cylindrical secondary battery comprising:
   a can comprising a disk-shaped upper surface portion through which a terminal hole passes, and a cylindrical side portion extending from the upper surface portion;
   an electrode assembly accommodated in the can;
   a terminal part comprising a first terminal outside the upper surface portion and a second terminal inside the upper surface portion and riveted to the first terminal from the outside; and
   a cap assembly coupled to the side portion and insulated from the side portion,
   wherein the side portion and the second terminal are electrically connected to the electrode assembly.
NP12. The cylindrical secondary battery as claimed in NP11, wherein the first terminal comprises a plate having a through hole, and the second terminal is inserted through the terminal hole and the through hole from the inside of the can and has an end protruding outward from the upper surface portion.
NP13. The cylindrical secondary battery as claimed in NP12, wherein the second terminal comprises:
   a cylindrical rivet body having a first end exposed to an outside of the upper surface portion; and
   a flange protruding from an outer circumferential surface of a second side of the rivet body.
NP14. The cylindrical secondary battery as claimed in NP13, wherein the rivet body comprises a jig groove into which a riveting jig is insertable at an end of the upper surface portion facing outward, and an end of the rivet body and the flange is riveted to the first terminal and the upper surface portion.
NP15. The cylindrical secondary battery as claimed in NP14, wherein the first terminal comprises a terminal groove concavely formed in a plate surface of the first end of the rivet body.
NP16. The cylindrical secondary battery as claimed in NP14, further comprising at least one insulating member between the first and second terminals and the upper surface portion.
NP17. The cylindrical secondary battery as claimed in NP16, wherein the at least one insulating member comprises a first insulating member between the flange and the upper surface portion and having a hollow formed therein, a second insulating member between the terminal hole and the rivet body and having a hollow formed therein, and a third insulating member between the first terminal and the upper surface and having a hollow formed therein.
NP18. The cylindrical secondary battery as claimed in NP17, wherein a diameter of the hollow in the first insulating member is greater than that of the terminal hole, and the second insulating member further comprises a protrusion part protruding to be in contact with the flange of the second terminal and the first insulating member.
NP19. The cylindrical secondary battery as claimed in NP18, wherein a fixing protrusion protrudes from one of the flange and the protrusion part, and an insertion groove accommodating the fixing protrusion is located on another one of the flange and the protrusion part.
NP20. The cylindrical secondary battery as claimed in NP17, further comprising:
   a first electrode current collector plate between the first insulating member and the electrode assembly and electrically connected to the first electrode plate of the electrode assembly and the second terminal; and
   a second electrode current collector plate between the electrode assembly and the cap assembly and electrically connected to the electrode assembly and the side portion.
NP21. The cylindrical secondary battery as claimed in NP20, wherein the first electrode plate is a positive electrode, and the second electrode plate is a negative electrode.
NP22. The cylindrical secondary battery as claimed in NP21, wherein the side portion comprises a beading part concavely formed toward an inside of the can, and the second electrode current collector comprises a plate surface part electrically connected to the second electrode plate and an extension part electrically connected to the beading part.
NP23. The cylindrical secondary battery as claimed in NP22, wherein the cap assembly comprises a cap plate and a gasket made of an insulating material arranged between the cap plate and the side portion, and an end of the gasket is arranged between an edge of the cap plate and the extension part.

## Claims

1. A cylindrical secondary battery comprising a can and a terminal part comprising:
a first terminal outside of the can; and
a second terminal coupled to a terminal hole of the can, arranged inside and outside of the can, and configured to be riveted to the first terminal from an outside of the can.

2. The cylindrical secondary battery as claimed in claim 1, wherein the second terminal comprises a first region parallel to an inner surface of the can in which the terminal hole is formed, and a second region extending from the first region and penetrating the terminal hole of the can to the outside of the can, and a jig groove into which a riveting processing jig is insertable is formed in the second region.

3. The cylindrical secondary battery as claimed in claim 2, wherein ends of the first region and the second region are configured to be riveted to the first terminal.

4. The cylindrical secondary battery as claimed in claim 2 or claim 3, further comprising first to third insulating members arranged between the first region and the inner surface of the can, between the second region and the terminal hole, and between the first terminal and an outer surface of the can, respectively.

5. The cylindrical secondary battery as claimed in any preceding claim, wherein the first terminal and the second terminal are made of a same material.

6. The cylindrical secondary battery as claimed in any preceding claim, wherein the first terminal is electrically connected to a bus bar.

7. The cylindrical secondary battery as claimed in any preceding claim, wherein a terminal groove is concavely formed in an area corresponding to the second terminal on an outer surface of the first terminal.

8. The cylindrical secondary battery as claimed in any preceding claim, wherein the can comprises a circular upper surface portion and a cylindrical side portion extending downward from the upper surface portion, and the terminal hole is formed through the upper surface portion.

9. The cylindrical secondary battery as claimed in claim 8, further comprising:
an electrode assembly in the can and electrically connected to the second terminal; and
a cap assembly coupled to the side portion to seal the can;
wherein, optionally, the side portion is electrically connected to the electrode assembly and insulated from the cap assembly.

10. The cylindrical secondary battery as claimed in claim 1, wherein
the can comprises a disk-shaped upper surface portion through which the terminal hole passes, and a cylindrical side portion extending from the upper surface portion;
an electrode assembly accommodated in the can; and
a cap assembly coupled to the side portion and insulated from the side portion,
wherein the side portion and the second terminal are electrically connected to the electrode assembly;
wherein the first terminal comprises a plate having a through hole, and the second terminal is inserted through the terminal hole and the through hole from the inside of the can and has an end protruding outward from the upper surface portion.

11. The cylindrical secondary battery as claimed in claim 10, wherein the second terminal comprises:
a cylindrical rivet body having a first end exposed to an outside of the upper surface portion; and
a flange protruding from an outer circumferential surface of a second side of the rivet body;
wherein the rivet body comprises a jig groove into which a riveting jig is insertable at an end of the upper surface portion facing outward, and an end of the rivet body and the flange is riveted to the first terminal and the upper surface portion.

12. The cylindrical secondary battery as claimed in claim 11, wherein the first terminal comprises a terminal groove concavely formed on the upper surface of the first terminal;
the cylindrical secondary battery further comprising at least one insulating member between the first and second terminals and the upper surface portion.

13. The cylindrical secondary battery as claimed in claim 12, wherein the at least one insulating member comprises a first insulating member between the flange and the upper surface portion and having a hollow formed therein, a second insulating member between the terminal hole and the rivet body and having a hollow formed therein, and a third insulating member between the first terminal and the upper surface and having a hollow formed therein;
wherein a diameter of the hollow in the first insulating member is greater than that of the terminal hole, and the second insulating member further comprises a protrusion part protruding to be in contact with the flange of the second terminal and the first insulating member, wherein, optionally, a fixing protrusion protrudes from one of the flange and the protrusion part, and an insertion groove accommodating the fixing protrusion is located on another one of the flange and the protrusion part.

14. The cylindrical secondary battery as claimed in claim 13, further comprising:
a first electrode current collector plate between the first insulating member and the electrode assembly and electrically connected to the first electrode plate of the electrode assembly and the second terminal; and
a second electrode current collector plate between the electrode assembly and the cap assembly and electrically connected to the electrode assembly and the side portion.

15. The cylindrical secondary battery as claimed in claim 14, wherein the first electrode plate is a positive electrode, and the second electrode plate is a negative electrode; and
wherein the side portion comprises a beading part concavely formed toward an inside of the can, and the second electrode current collector comprises a plate surface part electrically connected to the second electrode plate and an extension part electrically connected to the beading part, wherein, optionally, the cap assembly comprises a cap plate and a gasket made of an insulating material arranged between the cap plate and the side portion, and an end of the gasket is arranged between an edge of the cap plate and the extension part.
